# EUROPEAN PATENT SPECIFICATION

(11) **EP 4 653 320 B1**
(45) Date of publication and mention of the grant of the patent: **07.10.2026**
(21) Application number: 25176082.3
(22) Date of filing: 13.05.2025
(51) Int. Cl.: B64D 13/06

(54) **ENVIRONMENTAL CONTROL SYSTEM FOR AN AIRCRAFT**
UMGEBUNGSKONTROLLSYSTEM FÜR EIN FLUGZEUG
SYSTÈME DE CONTRÔLE ENVIRONNEMENTAL POUR AÉRONEF

(30) Priority: 24.05.2024 US 202418673612
(43) Date of publication of application: 26.11.2025
(60) Divisional application: 26180271.4 / 4 772 440; 26180272.2 / 4 772 441
(73) Proprietor: The Boeing Company, Arlington, VA 22202 (US)
(72) Inventor: Dirusso, Joseph M., Arlington, 22202 (US); Tretow, Paul R., Arlington, 22202 (US); McWhirter, Jacob Bevan, Arlington, 22202 (US); Megchiani, Chetan Bhagwandas, Arlington, 22202 (US)
(74) Representative: Witte, Weller & Partner Patentanwälte mbB

(56) References cited:
- US-A- 2 509 899
- US-A- 4 374 469
- US-A1- 2010 258 675

## Description

### TECHNOLOGICAL FIELD

The present disclosure relates generally to the field of aircraft and, more specifically, to an environmental control system in an aircraft and a method of creating thrust in an aircraft.

### BACKGROUND

Many aircraft are equipped with an environmental control system (ECS). The ECS provides an interior space of the aircraft with temperature adjusted and/or de-humidified air. The air supplied by the ECS is bleed air received from a source, such as from an engine compressor of an engine or an auxiliary power unit. The ECS also includes a ram air circuit that takes in air from the exterior of the aircraft. The ram air is relatively cooler and at a lower pressure than the bleed air. The ram air is used to cool the bleed air in one or more heat exchangers included in the ram air circuit.

The bleed air is high-pressure air that is typically too hot to be provided directly to the interior space. For example, the bleed air can be in excess of 300°F (148.9°C).

The ECS diverts a portion of the bleed air through the ram air circuit to cool the air. The cooled air is then mixed with other bleed air to obtain a desired temperature prior to being delivered to the interior space. The ECS also lowers the pressure of the bleed air prior to delivery to the interior space.

An issue with existing systems is the wasted energy that occurs during delivery of the air to the interior space. The ECS system reduces the pressure of the bleed air prior to delivery to the interior space. This excess energy in the form of elevated pressure is wasted in the air delivery process. This energy is not utilized in a productive manner. Existing systems use throttling valves to reduce the pressure of the bleed air. However, the throttling valves are not energy efficient.

Another issue with existing systems is the ram air circuit creates a negative force or drag on the aircraft. This drag is a result of the incoming air that enters the ram air circuit being at a higher velocity than the air that is exhausted.

Document US 2,509,899 A1, according to column 1, lines 1 to 5, relates to air conditioning systems for aircraft. More particularly it relates to a system for cooling the ventilating air introduced into the cabin of a pressurized, high speed, high altitude aircraft.

Column 2, lines 42-53 of US 2,509,899 A1 states: "Referring to Figure 1, there is shown the system as applied to a jet-propelled aircraft provided with a gas turbine type, thermal jet engine, having a combustion air compressor 10 supplied with air through an intake duct 11, which may be provided with a ram intake opening 12. In order to pressurize the aircraft cabin 13, air is bled from the compressor of the jet engine by means of a supply duct 14, which leads to a heat exchanger, generally indicated at 15, and thence to an expansion or cooling engine 16, preferably, though not necessarily, a turbine as indicated."

Column 3, lines 48-51 of US 2,509,899 A1 states: "The primary coolant air is discharged to the ambient atmosphere through rearwardly directed nozzle 25, where some jet thrust may be recovered."

### SUMMARY

According to the present disclosure, an environmental control system pack for an aircraft and a method of creating thrust in an aircraft as defined in the independent claims are provided. Further embodiments are defined in the dependent claims. Although the scope is only defined by the claims, the below embodiments, examples, and aspects are present for aiding in understanding the background and advantages.

One aspect of the invention is directed to an environmental control system pack for an aircraft. The environmental control system pack comprises a ram air circuit configured to receive air from an atmosphere on an exterior of the aircraft and to expel the air through an outlet back into the atmosphere, the ram air circuit comprising a fan to direct the air towards the outlet; a bleed flow circuit configured to receive bleed air from an engine of the aircraft and to cool the air prior to the bleed air being delivered to an interior space of the aircraft, the bleed flow circuit comprising a turbine; wherein the turbine is operatively connected to the fan; wherein the turbine is configured to be driven by energy from the bleed air, and the turbine in turn is configured to drive the fan to increase a compression power of the air in the ram air circuit to increase a thrust of the air exiting the ram air circuit; wherein the ram air circuit comprises heat exchangers and the bleed air from the bleed flow circuit is movable through the heat exchangers to reduce a temperature of the bleed air, and wherein the fan is positioned along the ram air circuit upstream from the heat exchangers.

A shaft may extend between and operatively connect the turbine and the fan.

The turbine may comprise variable nozzle guide vanes to regulate the bleed air through the bleed flow circuit and to enable a predetermined flow rate across a range of pressures of the bleed air received from the engine.

The turbine may be configured to drive the fan just when the aircraft is in flight.

The ram air circuit may comprise a duct comprising an inlet that is configured to receive the air from the atmosphere and the outlet through which the air is expelled back into the atmosphere, wherein the fan is configured to direct the air through the duct; wherein the bleed flow circuit comprises ducts that are configured to direct the bleed air to the heat exchangers and to the interior space of the aircraft; wherein the turbine is configured to be driven by the bleed air from the heat exchangers; and wherein the turbine is configured to drive the fan to increase the thrust produced by the ram air circuit.

The fan may be configured to increase pressure of the air in the ram air circuit when the fan is driven by the turbine.

The bleed flow circuit may further comprise a compressor and the heat exchangers comprise a first heat exchanger positioned upstream from the compressor and a second heat exchanger positioned downstream from the compressor and upstream from the turbine.

A bypass valve may be positioned along the ram air circuit and is configured to direct the air away from the fan when the aircraft is in flight.

A bypass valve may be positioned along the bleed flow circuit with the bypass valve configured to direct the bleed air from a first heat exchanger of the heat exchangers to a second heat exchanger of the heat exchangers and bypass a section of the bleed air circuit.

The turbine may be configured to be driven by bleed air from a first heat exchanger of the heat exchangers and a second heat exchange of the heat exchangers is positioned downstream from the turbine.

The environmental system pack may comprise a control units configured to control one or more of a turbine nozzle, a compressor bypass valve, an inlet of the ram air circuit, an outlet of the ram air circuit, a ram flow rate, and a flow rate of the bleed air to minimize fuel burn of the aircraft.

A further aspect of the invention is directed to a method of creating thrust in an aircraft. The method comprises: receiving air from an exterior of the aircraft in a ram air circuit with the ram air circuit comprising a fan, and heat exchangers; receiving bleed air from an engine of the aircraft in a bleed flow circuit; directing the bleed air through the heat exchangers and lowering a temperature of the bleed air; directing the bleed air that has moved through one or more of the heat exchangers to a turbine and powering the turbine; driving the fan in the ram air circuit with the turbine and increasing a pressure of the air moving through the ram air circuit; and expelling the air with the increased pressure through an outlet of the ram air circuit and creating thrust for the aircraft; further comprising directing the air through the fan and into a first heat exchanger of the heat exchangers and a second heat exchanger of the heat exchangers with the fan positioned upstream from the first heat exchanger and the second heat exchanger along the ram air circuit.

The method may further comprise directing the bleed air through both the first heat exchanger and the second heat exchanger prior to directing the bleed air to the turbine.

The method may further comprise adjusting a nozzle at an outlet of the ram air circuit and creating the thrust for the aircraft.

The method may further comprise directing the bleed air from the turbine to the second heat exchanger with the second heat exchanger positioned downstream from the turbine along the bleed flow circuit.

Further details of the features, functions and advantages that have been discussed can be seen with reference to the following description and the drawings.

### BRIEF DESCRIPTION OF THE DRAWINGS

Figure 1 is an isometric view of an aircraft with an environmental control system pack.
Figure 2 is a schematic diagram of a ram air circuit that receives air from the exterior of the aircraft and expels the air back into the environment.
Figure 3 is a schematic diagram of an environmental control system pack having a bleed flow circuit and a ram air circuit.
Figure 4 is a schematic diagram of an environmental control system pack with a bleed flow circuit and a ram air circuit.
Figure 5 is a schematic diagram of an environmental control system pack and a first example of positioning of components of a bleed flow circuit and a ram air circuit.
Figure 6 is a schematic diagram of an example of an environmental control system pack with positioning of components of a bleed flow circuit and a ram air circuit with a compressor bypass valve.
Figure 7 is a schematic diagram of an example of an environmental control system pack with positioning of components of a bleed flow circuit and a ram air circuit with a heat exchanger positioned downstream from a turbine.
Figure 8 is a schematic diagram of an environmental control system pack with positioning of components of a bleed flow circuit and a ram air circuit with heat exchangers positioned upstream from a fan.
Figure 9 is a schematic diagram of a control unit that controls the operation of the environmental control system pack.
Figure 10 is a method of creating thrust in an aircraft using an environmental control system pack.
Figure 11 is a schematic diagram of an environmental control system pack with a fluid flow circuit and a ram air circuit.

### DETAILED DESCRIPTION

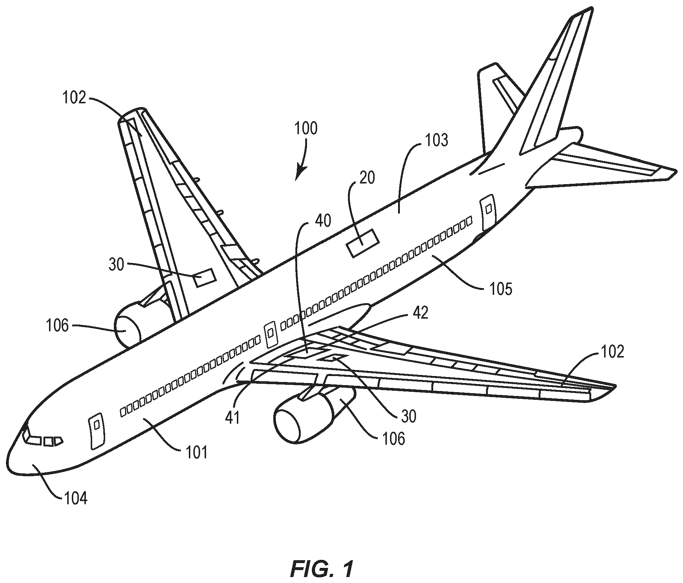

Figure 1 illustrates an aircraft 100 that generally includes a fuselage 101 and wings 102. One or more engines 106 propel the aircraft 100 during flight. The fuselage 101 includes an interior space 103 configured to hold passengers and/or cargo. The interior space 103 includes a flight deck 104 for flight personnel to sit during flight to control the aircraft 100. In some examples, the interior space 103 includes a cabin area 105 configured to accommodate passengers. Additionally or alternatively, the interior space 103 includes a hold configured to store cargo.

The aircraft 100 includes an environmental control system (ECS) that provides the interior space 103 with temperature adjusted and/or de-humidified air. When the aircraft 100 is pressurized, the ECS also provides pressurization to a portion or entirety of the interior space 103. The ECS includes one or more ECS packs 20 that include a bleed flow circuit 30 that provides the air to the interior space 103. In some examples, the bleed air is supplied from one or more of the engines 106. The bleed air is high-temperature (e.g., in excess of 300 °F (148.9°C)) and high-pressure air that is removed from a compressor of one or more of the engines 106. The ECS pack 20 also includes a ram air circuit 40 to reduce the temperature and/or pressure of the bleed air. The ram air circuit 40 can be positioned at various positions on the aircraft 100, including on the bottom of the aircraft such as within a wing-fuselage fairing. Air from the atmosphere flows into the ram air circuit 40 through an inlet 41 and flows out through an outlet 42. Airflow through the ram air circuit 40 occurs during movement of the aircraft through the air (e.g., during flight and/or during high-speed taxi operations). At other times such as when the aircraft 100 is parked and/or taxiing slowly, a fan (not illustrated in Figure 1) drives airflow through the ram air circuit 40.

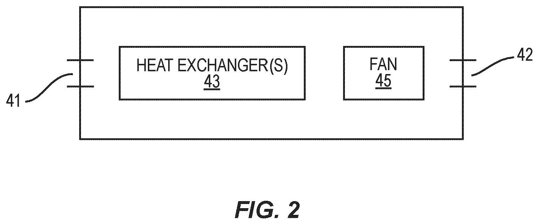

Figure 2 schematically illustrates a ram air circuit 40 that includes an air duct 47 that extends between an inlet 41 and an outlet 42. Air from the atmosphere outside the aircraft 100 enters through the inlet 41, travels through the duct 47, and is expelled back into the atmosphere at the outlet 42. One or more heat exchangers 43 use the ram air to transfer heat from the bleed air to reduce the temperature prior to the bleed air being delivered to the interior space 103. The ram air circuit 40 also includes a fan 45 that moves the ram air along the duct 47. In some examples, the fan 45 includes variable pitch fan blades.

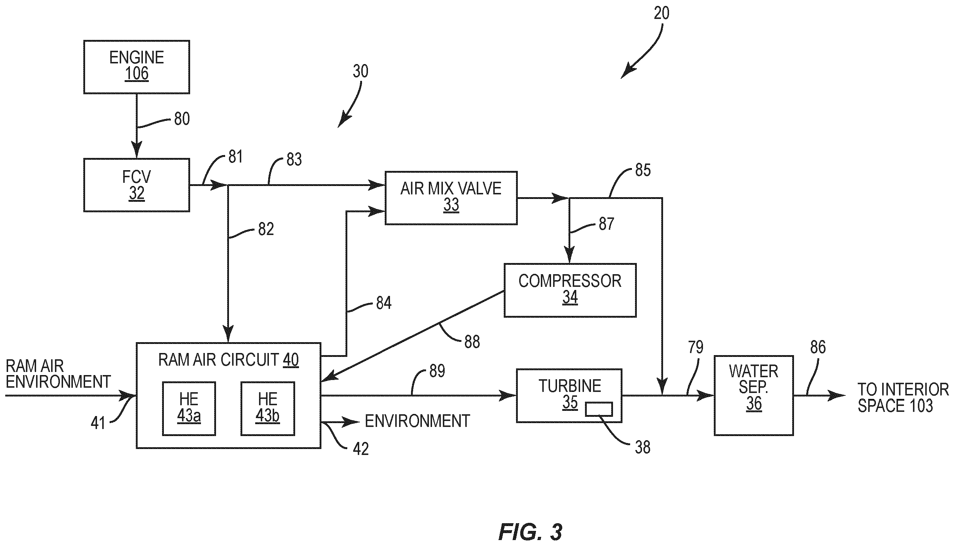

Figure 3 is a block diagram of an ECS pack 20 that includes a bleed flow circuit 30 and a ram air circuit 40. The block diagram includes arrows in the depicted ducts to illustrate the direction of airflow. In various aspects, the air flow paths are ducts that direct air from one component to another. The ducts can include various configurations and can refer to different types of passageways, channels, or other flow paths that can direct the flow of air. In various other aspects, two components may be contained within a single module and the air flow path is an internal channel within the module.

The ECS pack 20 is positioned between the one or more engines 106 that supply the bleed air 31 and the interior space 103. Bleed air from the one or more engines 106 flows through duct 80 to a flow control valve (FCV) 32. The FCV 32 is operable to adjust the flow rate of bleed air into duct 81. Air passing through the FCV 32 is hot, with examples including temperatures of 300 °F (148.9°C) or hotter. The FCV 32 diverts a portion of the air from the duct 81 to the interior space 103 (via duct 83, an air mix valve 33, and ducts 85, 86 leading to the interior space 103). The FCV 32 directs a remaining portion of the air from the duct 81 through duct 82 to the ram air circuit 40 to reduce the temperature.

In this example, the ram air circuit 40 includes a first heat exchanger 43a and a second heat exchanger 43b. Other examples include fewer or more heat exchangers as necessary to condition the bleed air. The duct 82 directs the bleed air to the first heat exchanger 43. The first heat exchanger 43a removes some of the heat from the air and outputs the cooler air into duct 84. The temperature of the air in the duct 84 depends on several factors such as the ram air temperature. In some examples, the temperature of the bleed air in duct 84 is between 40°F (4.4°C) and 200°F (93.3°C).

The air from duct 84 is directed to an air mix valve 33 to mix with the other portion of the bleed air. A portion of the mixed air is directed to duct 85 for delivery to the interior space 103. Another portion of the mixed air is directed to duct 87 and to a compressor 34 which raises the pressure and temperature of the air. The air from the compressor 34 passes through a duct 88 to the second heat exchanger 43b in the ram air circuit 40. The second heat exchanger 43b decreases the temperature of the air. The cooled air from the second heat exchanger 43b then travels through a duct 89 to a turbine 35. In some examples, the turbine 35 is an expander. At the output of the turbine 35, the air can be close to the freezing point of water (e.g., in a range between 30°F (-1.1 °C) and 35°F (1.7°C)) depending on the ram air temperature and the airflow through the ram air circuit 40.

The air from the turbine 35 that is in duct 79 is combined with the bleed air that flows from the duct 85. In some examples, a water separator 36 is located along duct 86 to remove water from the air. Air reaches the interior space 103 via the duct 86 at a suitable temperature to provide controllable temperature regulation in the interior space 103.

The bleed air has an elevated pressure when initially received at the ECS pack 20. The ECS pack 20 is configured to convert the energy from the excess pressure in the bleed air to produce thrust in the ram air circuit 40 to propel the aircraft 100. The thrust is created by the turbine 35 converting excess bleed energy into shaft power which in turn powers the fan 45 to compress air and produce additional air pressure in the ram air circuit 40 that is output through the outlet 42 to create the thrust. The outlet 42 is configured to convert the air pressure to velocity to produce the thrust.

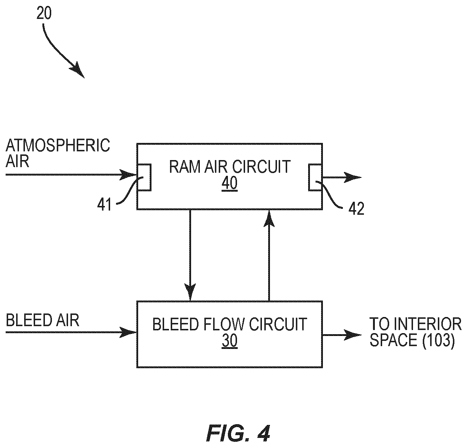

Figure 4 illustrates an overview of the ECS pack 20 that utilizes the excess pressure in the bleed air to produce thrust through the ram air circuit 40. The bleed air received by the bleed flow circuit 30 has an elevated pressure above that which is supplied to the interior space 103. Instead of releasing this excess energy during the cooling and delivery of the air to the interior space 103, the excess energy is utilized to produce additional pressure in the ram air circuit 40 to create thrust at the outlet 42.

In some examples during flight, the atmospheric air that enters the ram air circuit 40 is boundary layer air. This boundary layer air is at a pressure lower than ambient total pressure, resulting in high propulsive efficiency of compression energy that is added to the ram air circuit 40.

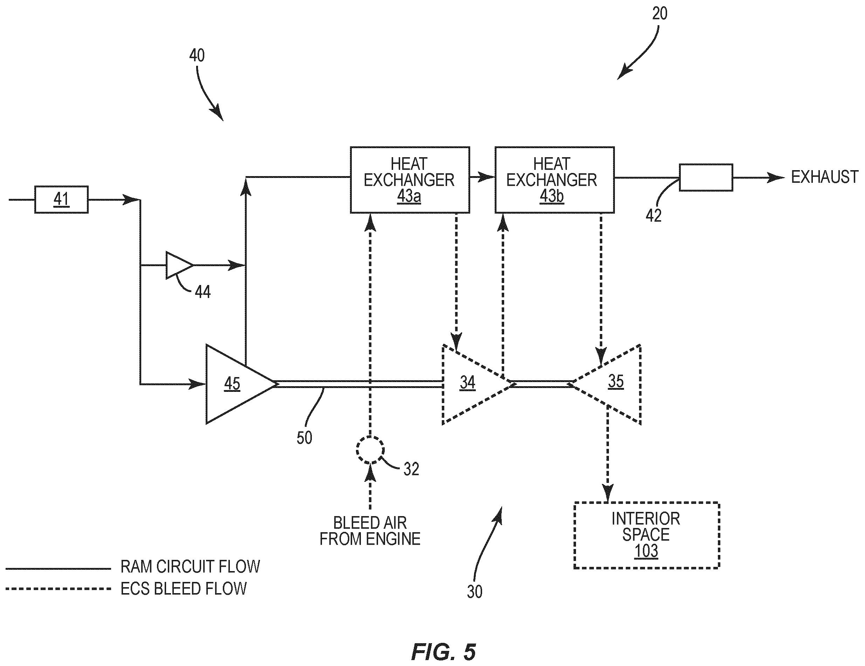

Figure 5 illustrates the operation of the ram air circuit 40 with ram air (i.e., atmospheric air) introduced into the inlet 41 and delivered to the first heat exchanger 43a and second heat exchanger 43b to cool the bleed air as described above. The fan 45 moves the air downstream along the ram air circuit 40. The ram air is output from the heat exchangers 43a, 43b and directed to the outlet 42 and output from the aircraft 100. As further illustrated in Figure 5, the bleed flow circuit 30 includes the bleed air introduced through the flow control valve 32. The bleed air moves through the first heat exchanger 43a and then to the compressor 34 prior to reaching the second heat exchanger 43b. The air from the second heat exchanger 43b moves through the turbine 35 and eventually to the interior space 103.

The compressor 34 and the turbine 35 of the bleed flow circuit 30 are connected through a shaft 50 to the fan 45 of the ram air circuit 40. Excess air pressure from the second heat exchanger 43b is delivered to the turbine 35. This excess energy drives the turbine 35 which in turn drives the fan 45 at a higher rate to increase the pressure of the air within the ram air circuit 40. This air is released at the outlet 42 and produces thrust to propel the aircraft 100.

In Figure 5, the fan 45 is positioned along the ram air circuit 40 upstream of the heat exchangers 43a, 43b. This relative positioning enables more efficient compression because it is more efficient to add heat after compression. In an illustrative example useful for the technical understanding of the disclosure, the fan 45 is located downstream from the heat exchangers 43a, 43b. Locating the fan downstream from the heat exchangers 43 provides for improved cooling of the bleed air since the heat of compression occurs after the heat exchangers 43.

The fan 45 can be driven in different manners. In some examples, the fan 45 is driven by warm air supplied through the bleed flow circuit 30. In other examples, the fan 45 is driven by a separate power source or from one or more other systems within the aircraft 100.

In some examples, the fan 45 moves the ram air through the ram air duct 40 in the event that movement of the aircraft 100 through the atmosphere does not provide sufficient flow. In one example, the fan 45 operates to provide air when the aircraft 100 is stationary on the ground. A bypass check valve 44 is positioned for the air to bypass the fan 45 when the air is moving with sufficient flow (e.g., during flight).

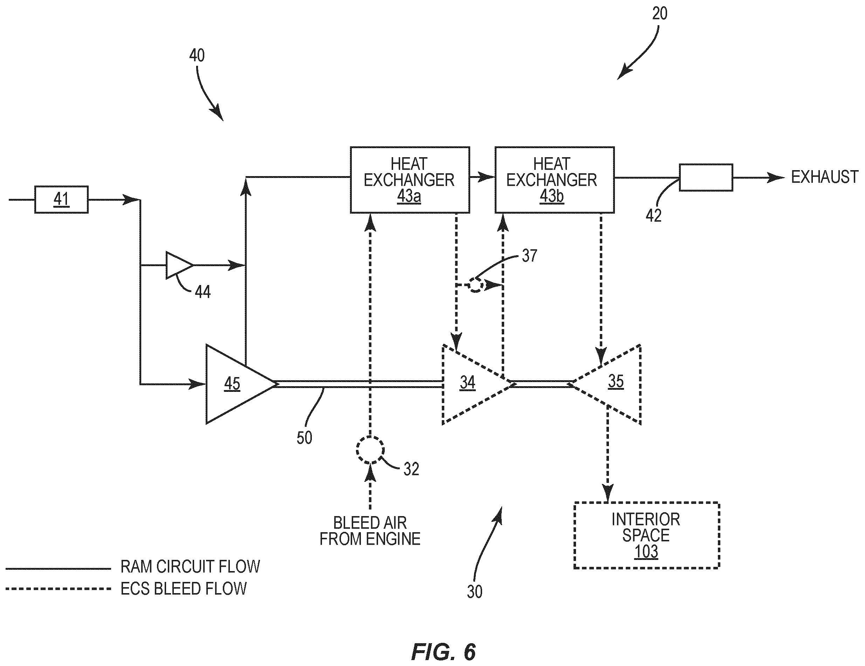

In some examples, the compressor 34 is bypassed in the bleed flow circuit 30. One example illustrated in Figure 6 includes a bypass valve 37 positioned between the heat exchangers 43a, 43b. When the bypass valve 37 is closed, air from the first heat exchanger 43a is supplied to the compressor 34. The compressor 34 increases the pressure and temperature of the air and directs the air to the second heat exchanger 43b.

When the bypass valve 37 is open, air from the first heat exchanger 43a bypasses the compressor 34 and is sent to the second heat exchanger 43b. In some examples, the bypass valve 37 bypasses the compressor 34 when sufficient cooling of bleed air can be done without needing the second heat exchanger 43b to receive hotter bleed air due to the compressor 34 heat of compression. The benefit of bypassing the compressor 34 is that all power created by the turbine 35 is available for the fan 45 to add pressure to the ram air.

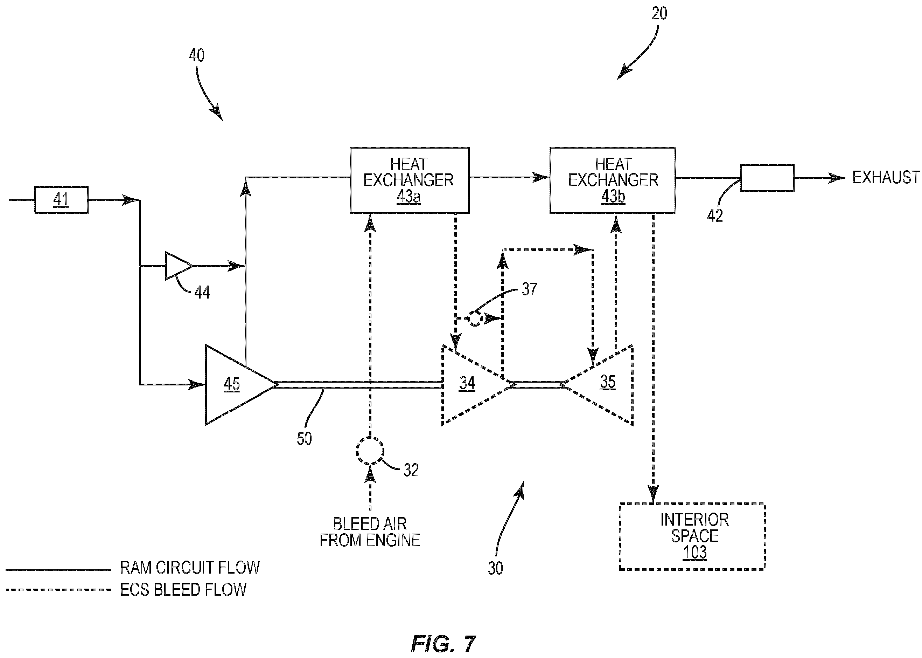

Figure 7 includes the ECS pack 20 with the second heat exchanger 43b positioned downstream from the turbine 35. Bleed air in the bleed flow circuit 30 moves through the first heat exchanger 43a and to one or both of the compressor 34 and turbine 35. The bleed air from the turbine 35 is then directed to the second heat exchanger 43b and is further conditioned for delivery to the interior space 103. In this example, the turbine 35 creates more shaft power which is a result of its input temperature being higher due to the heat exchanger 43b being downstream from the turbine 35.

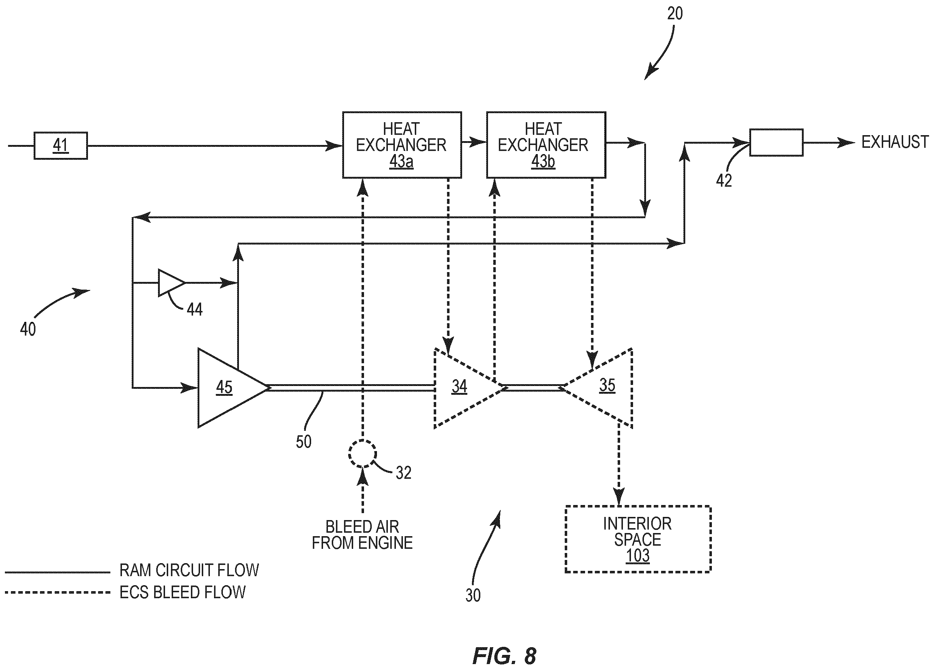

Figure 8 illustrates an illustrative example, useful for the technical understanding the disclosure, with both heat exchangers 43a, 43b upstream from the fan 45 in the ram air circuit 40. Ram air enters the inlet 41 and is directed to the first heat exchanger 43a and the second heat exchanger 43b. The ram air is then directed to the fan 45. An advantage of this illustrative configuration, useful for the technical understanding of the disclosure, with the fan 45 downstream from the heat exchangers 43a, 43b is that the heat of compression of the fan 45 occurs after the heat exchangers 43a, 43b thus the effectiveness of the heat exchangers 43a, 43b is improved.

As illustrated in the examples above, the ECS pack 20 has many of the required elements of a distributed propulsion system. This includes an energy source (in the form of excess pneumatic energy), a device to convert energy source into shaft power (i.e., turbine 35), a device to convert shaft power into thrust (i.e., fan 45), and inlet and outlet on the ram air circuit 40. In some examples, one or both of the inlet 41 and outlet 42 include a variable geometry configuration. In some examples, the ram air circuit 40 provides a desirable place to start with distributed propulsion since the ram air circuit 40 currently exhausts below ambient pressure and work added to this circuit gets the benefit of very high effective propulsive efficiency.

In some examples, a control unit 90 monitors the operation of the ECS pack 20 and the thrust produced through the ram air circuit 40. The control unit 90 is configured to provide required ECS functions while minimizing the fuel burn of the aircraft 100. In some examples, the control unit 90 minimizes the fuel burn by controlling one or more of a turbine nozzle area, the compressor bypass valve 37, the ram inlet 41 and outlet 42, and a flow rate of the ram air.

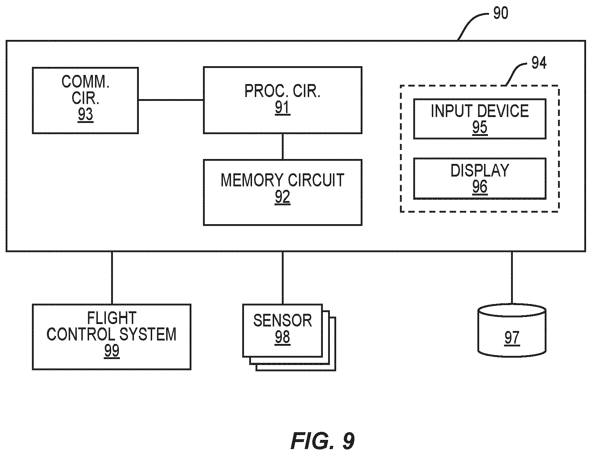

As illustrated in Figure 9, the control unit 90 includes processing circuitry 91 and memory circuitry 92. The processing circuitry 91 controls overall operation of the ECS pack 20 according to program instructions stored in the memory circuitry 92. The processing circuitry 91 includes one or more circuits, microcontrollers, microprocessors, hardware, or a combination thereof. Memory circuitry 92 includes a non-transitory computer readable storage medium storing program instructions, such as a computer program product, that configures the processing circuitry 91 to implement one or more of the techniques discussed herein. Memory circuitry 92 can include various memory devices such as, for example, read-only memory, and flash memory. Memory circuitry 92 can be a separate component as illustrated in Figure 9 or can be incorporated with the processing circuitry 91. Alternatively, the processing circuitry 91 can omit the memory circuitry 92, e.g., according to at least some embodiments in which the processing circuitry 91 is dedicated and non-programmable.

Communications circuitry 93 is configured to receive signals from one or more of the components within the ECS pack 20. The communications circuitry 93 is also configured to receive signals from other systems on the aircraft 100, including but not limited to the engines 106 and associated engine components. In one example, the communications circuitry 93 includes an interface configured to communicate with the components. In one example, the interface operates according to the 802.11 family of standards, which is commonly known as a WiFi interface. The communication circuitry 93 can also be configured to communicate with one or more of a flight control system 99 that oversees operation of the aircraft 100 and an engine control system that oversees operation of the engines 106. This communication circuitry 93 can also provide for communication with one or more other systems onboard the aircraft 100.

A user interface 94 provides for a user on the aircraft 100 such as flight personnel operating the aircraft 100 to access information about the ECS pack 20. The user interface 94 can include one or more input devices 95 and displays 96. In some examples, the information at the control unit 90 is stored in a database 97. The database 97 can be separate from the control unit 90 as illustrated in Figure 9 or can be incorporated with the control unit 90.

In some examples, one or more sensors 98 are positioned in the ECS pack 20 to sense one or more conditions (e.g., temperature, pressure, air flow rate). Sensors 98 transmit signals to the control unit 90 to further operate and control the ECS pack 20.

In some examples, the control unit 90 is incorporated into one or more other systems within the aircraft 100. In some examples, the control unit 90 is incorporated within a larger control system. In some examples, the control unit 90 is incorporated into the flight control system 99.

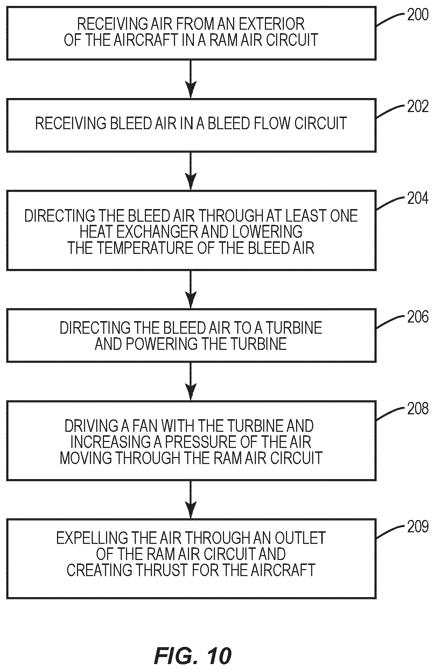

Figure 10 illustrates a method of creating thrust of an aircraft 100. The method includes receiving air from an exterior of the aircraft 100 in a ram air circuit 40 (block 200). Bleed air is also received in a bleed flow circuit 30 (block 202). The bleed air is directed through at least one heat exchanger 43 to lower temperature of the bleed air (block 204). The bleed air that has moved through at least one heat exchanger 43 is directed to a turbine 35 to power the turbine 35 (block 206). The turbine 35 then drives a fan in the ram air circuit 40 which increases a pressure of the air moving through the ram air circuit 40 (block 208). The air with increased pressure is expelled through an outlet 42 of the ram air circuit 40 to create thrust for the aircraft 100 (block 209).

In some examples, the power supplied to the fan 45 is equal to the work of the turbine 35. Therefore, the exhaust temperature of the air exiting the ram air circuit 40 is identical to a case where excess pressure is throttled in the flow control valve 32.

In some examples, the turbine 35 has variable inlet guide vanes 38. The variable inlet guide vanes 38 can be adjusted to achieve the desired pack flow rate across a range of bleed pressures being supplied to the ECS pack 20. The variable inlet guide vanes 38 allow for efficient pack flow modulation without the need for a throttling device.

The aircraft 100 can include one or more ECS pack 20. Each ECS pack 20 can receive bleed air from one or more sources. Each ECS pack 20 can also receive ram air from one or more ram air circuits 40.

In the examples described above, the bleed air is supplied by one or more of the engines 106. Additionally or alternatively, the bleed air is provided from an auxiliary power unit (APU) or an output of a turbocharger for a reciprocating engine.

In some examples, a nozzle is positioned at the outlet 42 of the ram air circuit 40. The nozzle directs the flow of the ram air out of the ram air circuit 40. The nozzle can control one or more of the flow, speed, direction, pressure, and shape of the airflow that emerges from the ram air circuit 40. The nozzle is configured to produce thrust. The nozzle can include various cross sectional shapes and sizes. In some examples, the nozzle is an adjustable variable area nozzle controlled by the control unit 90. The control unit 90 adjusts the nozzle to produce the desired thrust.

In some examples, the ECS pack 20 includes one or more additional components that harvest the energy of the bleed air to pressurize the ram air circuit 40. In some examples, the ECS pack 20 includes a separate shaft which includes a pneumatic turbine connected to a fan 45 on a single spool. In some examples, the ECS pack 20 includes a turbine connected to a generator which powers an electric compressor.

In some examples, the ram air circuit 40 includes separate fans for different modes of operations. A first fan 45 is used when the aircraft 100 is on the ground. A second fan 45 is used when the aircraft 100 is in flight. In some examples, a gearbox and clutch elements enable the turbine 35 to selectively power the two fans 45.

In some examples, the ECS pack 20 includes one or more components to add pressure to the ram air circuit 40 other than through the bleed air. In some examples, an electric motor powers a compressor that adds pressure to the ram air circuit 40. In some examples, a hydraulically driven compressor adds pressure to the ram air circuit 40. In some examples, a compressor that is powered by cabin air outflow valve turbines adds pressure to the ram air circuit 40.

The ECS pack 20 includes a ram air circuit 40 and a bleed flow circuit 30. The bleed flow circuit 30 receives bleed air from a source (e.g., engine 106, APU). In other examples, the ECS pack 20 includes a fluid flow circuit that receives a fluid from a source (e.g., cooling hot hydraulic fluid, a condenser for a vapor cycle cooling system, a liquid cooling loop for power electronics). The fluid in the fluid flow circuit is cooled by the pack. This fluid may or may not be the power source that drives a fan in the bleed flow circuit 30 to increase a thrust of air exiting the ram air circuit 40.

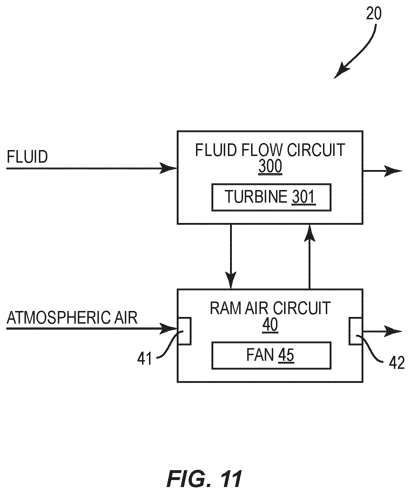

Figure 11 illustrates an ECS pack 20 with a fluid flow circuit 300 and a ram air circuit 40. The fluid flow circuit 300 can have various configurations, such as being a pneumatic, hydraulic, or fuel system that each receives a fluid from another system. The fluid flow circuit 300 cools the fluid and delivers the fluid to an output. The ram air circuit 40 receives air at an inlet 41 from an atmosphere on an exterior of the aircraft 100 and expels the air through an outlet 42 back into the atmosphere. A turbine 301 in the fluid flow circuit 300 is connected to a fan 45 in the ram air circuit 40. Energy in the fluid drives the turbine 301 which in turn drives the fan 45 to increase a compression power of the air in the ram air circuit 40 to increase a thrust of the air exiting through the outlet 42. Alternatively, the fluid flow circuit is not used to power the ram fan and the ram fan would be powered by an alternative power source such as an electric motor.

The present invention may, of course, be carried out in other ways than those specifically set forth herein.

The present embodiments are to be considered in all respects as illustrative and not restrictive, the true scope of the invention being defined by the wording of the appended claims.

## Claims

1. An environmental control system pack (20) for an aircraft (100), the environmental control system pack (20) comprising:
a ram air circuit (40) configured to receive air from an atmosphere on an exterior of the aircraft (100) and to expel the air through an outlet (42) back into the atmosphere, the ram air circuit (40) comprising a fan (45) to direct the air towards the outlet (42);
a bleed flow circuit (30) configured to receive bleed air from an engine (106) of the aircraft (100) and to cool the air prior to the bleed air being delivered to an interior space (103) of the aircraft (100), the bleed flow circuit (30) comprising a turbine (35);
wherein the turbine (35) is operatively connected to the fan (45);
wherein the turbine (35) is configured to be driven by energy from the bleed air, and the turbine (35) in turn is configured to drive the fan (45) to increase a compression power of the air in the ram air circuit (40) to increase a thrust of the air exiting the ram air circuit (40);
wherein the ram air circuit (40) comprises heat exchangers (43) and the bleed air from the bleed flow circuit (30) is movable through the heat exchangers (43) to reduce a temperature of the bleed air, and
wherein the fan (45) is positioned along the ram air circuit (40) upstream from the heat exchangers (43).

2. The environmental control system pack (20) of claim 1, further comprising a shaft (50) that extends between and operatively connects the turbine (35) and the fan (45).

3. The environmental control system pack (20) of claim 1 or 2, wherein the turbine (35) comprises variable nozzle guide vanes (38) to regulate the bleed air through the bleed flow circuit (30) and to enable a predetermined flow rate across a range of pressures of the bleed air received from the engine (106).

4. The environmental control system pack (20) of any of claims 1 to 3, wherein the turbine (35) is configured to drive the fan (45) just when the aircraft (100) is in flight.

5. The environmental control system pack (20) according to claim 1, wherein:
the ram air circuit (40) comprises:
a duct comprising an inlet (41) that is configured to receive the air from the atmosphere and the outlet (42) through which the air is expelled back into the atmosphere, wherein the fan (45) is configured to direct the air through the duct (47);
wherein the bleed flow circuit (30) comprises ducts that are configured to direct the bleed air to the heat exchangers (43) and to the interior space (103) of the aircraft (100);
wherein the turbine (35) is configured to be driven by the bleed air from the heat exchangers (43); and
wherein the turbine (35) is configured to drive the fan (45) to increase the thrust produced by the ram air circuit (40).

6. The environmental control system pack (20) of any of claims 1 to 5, wherein the fan (45) is configured to increase pressure of the air in the ram air circuit (40) when the fan (45) is driven by the turbine (35).

7. The environmental control system pack (20) of any of claims 1 to 6, wherein the bleed flow circuit (30) further comprises a compressor (34), wherein the heat exchangers (43) comprise a first heat exchanger (43a) positioned upstream from the compressor (34) and a second heat exchanger (43b) positioned downstream from the compressor (34) and upstream from the turbine (35).

8. The environmental control system pack (20) of any of claims 1 to 7, further comprising a bypass valve (44) positioned along the ram air circuit, the bypass valve (44) configured to direct the air away from the fan (45) when the aircraft (100) is in flight.

9. The environmental control system pack (20) of any of claims 1 to 8, further comprising a bypass valve (37) positioned along the bleed flow circuit (30), the bypass valve (37) configured to direct the bleed air from a first heat exchanger (43a) of the heat exchangers (43) to a second heat exchanger (43b) of the heat exchangers (43) and bypass a section of the bleed flow circuit (30).

10. The environmental control system pack (20) of any of claims 1 to 6 and 8 and 9, when not depending from claim 7, wherein the turbine (35) is configured to be driven by bleed air from a first heat exchanger (43a) ; of the heat exchangers (43) and a second heat exchanger (43b) of the heat exchangers (43) is positioned downstream from the turbine (35).

11. The environmental control system pack (20) of any of claims 1 to 10, further comprising a control unit (90) configured to control one or more of a turbine nozzle, a compressor bypass valve (37), an inlet (41) and an outlet (42) of the ram air circuit (40), a ram flow rate, and a flow rate of the bleed air to minimize fuel burn of the aircraft (100).

12. A method of creating thrust in an aircraft (100), the method comprising:
receiving air from an exterior of the aircraft (100) in a ram air circuit (40) with the ram air circuit (40) comprising a fan (45), and heat exchangers (43, 43a, 43b):
receiving bleed air from an engine (106) of the aircraft (100) in a bleed flow circuit (30);
directing the bleed air through the heat exchangers (43) and lowering a temperature of the bleed air;
directing the bleed air that has moved through one or more of the heat exchangers (43) to a turbine (35) and powering the turbine (35);
driving the fan (45) in the ram air circuit (40) with the turbine (35) and increasing a pressure of the air moving through the ram air circuit (40); and
expelling the air with the increased pressure through an outlet (42) of the ram air circuit (40) and creating thrust for the aircraft (100);
further comprising directing the air through the fan (45) and into a first heat exchanger (43a) of the heat exchangers (43) and a second heat exchanger (43b) of the heat exchangers (43) with the fan (45) positioned upstream from the first heat exchanger (43a) and the second heat exchanger (43b) along the ram air circuit (40).

13. The method of claim 12, further comprising directing the bleed air through both the first heat exchanger (43a) and the second heat exchanger (43b) prior to directing the bleed air to the turbine (35).

14. The method of claim 12 or 13, further comprising adjusting a nozzle at an outlet (42) of the ram air circuit (40) and creating the thrust for the aircraft (100).

15. The method of any of claims 12 to 14, further comprising directing the bleed air from the turbine (35) to the second heat exchanger (43b) with the second heat exchanger (43b) positioned downstream from the turbine (35) along the bleed flow circuit (30).

## Patentansprüche

1. Umgebungskontrollsystem-Gruppe (20) für ein Luftfahrzeug (100), wobei die Umgebungskontrollsystem-Gruppe (20) aufweist:
einen Stauluftkreislauf (40), der eingerichtet ist, Luft aus einer Atmosphäre auf einer Außenseite des Luftfahrzeugs (100) aufzunehmen und die Luft durch einen Auslass (42) zurück in die Atmosphäre auszustoßen, wobei der Stauluftkreislauf (40) ein Gebläse (45) aufweist, um die Luft in Richtung des Auslasses (42) zu leiten;
einen Ablassluftkreislauf (30), der eingerichtet ist, Ablassluft von einem Triebwerk (106) des Luftfahrzeugs (100) aufzunehmen und die Luft zu kühlen, bevor die Ablassluft an einen Innenraum (103) des Luftfahrzeugs (100) abgegeben wird, wobei der Ablassluftkreislauf (30) eine Turbine (35) aufweist;
wobei die Turbine (35) mit dem Gebläse (45) betriebsmäßig verbunden ist;
wobei die Turbine (35) eingerichtet ist, durch Energie aus der Ablassluft angetrieben zu werden, und die Turbine (35) wiederum eingerichtet ist, das Gebläse (45) anzutreiben, um eine Verdichtungsleistung der Luft in dem Stauluftkreislauf (40) zu erhöhen, um einen Schub der aus dem Stauluftkreislauf (40) austretenden Luft zu erhöhen;
wobei der Stauluftkreislauf (40) Wärmetauscher (43) aufweist und die Ablassluft aus dem Ablassluftkreislauf (30) durch die Wärmetauscher (43) bewegbar ist, um eine Temperatur der Ablassluft zu verringern, und
wobei das Gebläse (45) entlang des Stauluftkreislaufs (40) stromaufwärts von den Wärmetauschern (43) angeordnet ist.

2. Umgebungskontrollsystem-Gruppe (20) nach Anspruch 1, die ferner eine Welle (50) aufweist, die sich zwischen der Turbine (35) und dem Gebläse (45) erstreckt und diese betriebsmäßig verbindet.

3. Umgebungskontrollsystem-Gruppe (20) nach Anspruch 1 oder 2, wobei die Turbine (35) variable Düsenleitschaufeln (38) aufweist, um die Ablassluft durch den Ablassluftkreislauf (30) zu regeln und eine vorbestimmte Durchflussrate über einen Bereich von Drücken der vom Triebwerk (106) aufgenommenen Ablassluft zu ermöglichen.

4. Umgebungskontrollsystem-Gruppe (20) nach einem der Ansprüche 1 bis 3, wobei die Turbine (35) eingerichtet ist, das Gebläse (45) nur dann anzutreiben, wenn sich das Luftfahrzeug (100) im Flug befindet.

5. Umgebungskontrollsystem-Gruppe (20) nach Anspruch 1, wobei:
der Stauluftkreislauf (40) aufweist:
einen Kanal, der einen Einlass (41), welcher eingerichtet ist, die Luft aus der Atmosphäre aufzunehmen, und den Auslass (42) aufweist, durch den die Luft zurück in die Atmosphäre ausgestoßen wird, wobei das Gebläse (45) eingerichtet ist, die Luft durch den Kanal (47) zu leiten;
wobei der Ablassluftkreislauf (30) Kanäle aufweist, die eingerichtet sind, die Ablassluft zu den Wärmetauschern (43) und zum Innenraum (103) des Luftfahrzeugs (100) zu leiten;
wobei die Turbine (35) eingerichtet ist, durch die Ablassluft von den Wärmetauschern (43) angetrieben zu werden; und
wobei die Turbine (35) eingerichtet ist, das Gebläse (45) anzutreiben, um den durch den Stauluftkreislauf (40) erzeugten Schub zu erhöhen.

6. Umgebungskontrollsystem-Gruppe (20) nach einem der Ansprüche 1 bis 5, wobei das Gebläse (45) eingerichtet ist, den Druck der Luft in dem Stauluftkreislauf (40) zu erhöhen, wenn das Gebläse (45) durch die Turbine (35) angetrieben wird.

7. Umgebungskontrollsystem-Gruppe (20) nach einem der Ansprüche 1 bis 6, wobei der Ablassluftkreislauf (30) ferner einen Verdichter (34) aufweist, wobei die Wärmetauscher (43) einen ersten Wärmetauscher (43a), der stromaufwärts von dem Verdichter (34) angeordnet ist, und einen zweiten Wärmetauscher (43b) aufweisen, der stromabwärts von dem Verdichter (34) und stromaufwärts von der Turbine (35) angeordnet ist.

8. Umgebungskontrollsystem-Gruppe (20) nach einem der Ansprüche 1 bis 7, die ferner ein Umgehungsventil (44) aufweist, das entlang des Stauluftkreislaufs angeordnet ist, wobei das Umgehungsventil (44) eingerichtet ist, die Luft von dem Gebläse (45) wegzuleiten, wenn sich das Luftfahrzeug (100) im Flug befindet.

9. Umgebungskontrollsystem-Gruppe (20) nach einem der Ansprüche 1 bis 8, die ferner ein Umgehungsventil (37) aufweist, das entlang des Ablassluftkreislaufs (30) angeordnet ist, wobei das Umgehungsventil (37) eingerichtet ist, die Ablassluft von einem ersten Wärmetauscher (43a) der Wärmetauscher (43) zu einem zweiten Wärmetauscher (43b) der Wärmetauscher (43) zu leiten und einen Abschnitt des Ablassluftkreislaufs (30) zu umgehen.

10. Umgebungskontrollsystem-Gruppe (20) nach einem der Ansprüche 1 bis 6 und 8 und 9, wenn nicht von Anspruch 7 rückbezogen, wobei die Turbine (35) eingerichtet ist, durch Ablassluft von einem ersten Wärmetauscher (43a) der Wärmetauscher (43) angetrieben zu werden, und wobei ein zweiter Wärmetauscher (43b) der Wärmetauscher (43) stromabwärts von der Turbine (35) angeordnet ist.

11. Umgebungskontrollsystem-Gruppe (20) nach einem der Ansprüche 1 bis 10, die ferner eine Steuereinheit (90) aufweist, die eingerichtet ist, eines oder mehrere von einer Turbinendüse, einem Verdichter-Umgehungsventil (37), einem Einlass (41) und einem Auslass (42) des Stauluftkreislaufs (40), einer Stauluft-Durchflussrate und einer Durchflussrate der Ablassluft zu steuern, um einen Kraftstoffverbrauch des Luftfahrzeugs (100) zu minimieren.

12. Verfahren zum Erzeugen von Schub in einem Luftfahrzeug (100), wobei das Verfahren aufweist:
Aufnehmen von Luft von einer Außenseite des Luftfahrzeugs (100) in einem Stauluftkreislauf (40), wobei der Stauluftkreislauf (40) ein Gebläse (45) und Wärmetauscher (43, 43a, 43b) aufweist;
Aufnehmen von Ablassluft von einem Triebwerk (106) des Luftfahrzeugs (100) in einem Ablassluftkreislauf (30);
Leiten der Ablassluft durch die Wärmetauscher (43) und Verringern einer Temperatur der Ablassluft;
Leiten der Ablassluft, die sich durch einen oder mehrere der Wärmetauscher (43) bewegt hat, zu einer Turbine (35) und Antreiben der Turbine (35);
Antreiben des Gebläses (45) in dem Stauluftkreislauf (40) mit der Turbine (35) und Erhöhen eines Drucks der sich durch den Stauluftkreislauf (40) bewegenden Luft; und
Ausstoßen der Luft mit dem erhöhten Druck durch einen Auslass (42) des Stauluftkreislaufs (40) und Erzeugen von Schub für das Luftfahrzeug (100);
ferner aufweisend ein Leiten der Luft durch das Gebläse (45) und in einen ersten Wärmetauscher (43a) der Wärmetauscher (43) und einen zweiten Wärmetauscher (43b) der Wärmetauscher (43), wobei das Gebläse (45) stromaufwärts von dem ersten Wärmetauscher (43a) und dem zweiten Wärmetauscher (43b) entlang des Stauluftkreislaufs (40) angeordnet ist.

13. Verfahren nach Anspruch 12, das ferner ein Leiten der Ablassluft durch sowohl den ersten Wärmetauscher (43a) als auch den zweiten Wärmetauscher (43b) vor dem Leiten der Ablassluft zur Turbine (35) aufweist.

14. Verfahren nach Anspruch 12 oder 13, das ferner ein Einstellen einer Düse an einem Auslass (42) des Stauluftkreislaufs (40) und ein Erzeugen des Schubs für das Luftfahrzeug (100) aufweist.

15. Verfahren nach einem der Ansprüche 12 bis 14, das ferner ein Leiten der Ablassluft von der Turbine (35) zum zweiten Wärmetauscher (43b) aufweist, wobei der zweite Wärmetauscher (43b) stromabwärts von der Turbine (35) entlang des Ablassluftkreislaufs (30) angeordnet ist.

## Revendications

1. Ensemble système de conditionnement d'air (20) destiné à un aéronef (100), l'ensemble système de conditionnement d'air (20) comprenant :
un circuit d'air dynamique (40) conçu pour recevoir de l'air en provenance d'une atmosphère sur un extérieur de l'aéronef (100) et pour rejeter l'air à travers une sortie (42) dans l'atmosphère, le circuit d'air dynamique (40) comprenant un ventilateur (45) pour diriger l'air en direction de la sortie (42) ;
un circuit d'écoulement de prélèvement (30) conçu pour recevoir de l'air de prélèvement en provenance d'un moteur (106) de l'aéronef (100) et pour refroidir l'air avant que l'air de prélèvement ne soit délivré à un espace intérieur (103) de l'aéronef (100), le circuit d'écoulement de prélèvement (30) comprenant une turbine (35) ;
dans lequel la turbine (35) est fonctionnellement reliée au ventilateur (45) ;
dans lequel la turbine (35) est conçue pour être entraînée par l'énergie provenant de l'air de prélèvement, et la turbine (35) est conçue à son tour pour entraîner le ventilateur (45) pour augmenter une puissance de compression de l'air dans le circuit d'air dynamique (40) pour augmenter une poussée de l'air sortant du circuit d'air dynamique (40) ;
dans lequel le circuit d'air dynamique (40) comprend des échangeurs de chaleur (43) et l'air de prélèvement provenant du circuit d'écoulement de prélèvement (30) peut se déplacer à travers les échangeurs de chaleur (43) pour réduire une température de l'air de prélèvement, et
dans lequel le ventilateur (45) est positionné le long du circuit d'air dynamique (40) en amont des échangeurs de chaleur (43).

2. Ensemble système de conditionnement d'air (20) selon la revendication 1, comprenant en outre un arbre (50) qui s'étend entre, et relie fonctionnellement, la turbine (35) et le ventilateur (45).

3. Ensemble système de conditionnement d'air (20) selon la revendication 1 ou 2, dans lequel la turbine (35) comprend des aubes de guidage à pas variable (38) pour réguler l'air de prélèvement à travers le circuit d'écoulement de prélèvement (30) et pour permettre un débit d'écoulement prédéterminé à travers une plage de pressions de l'air de prélèvement reçu du moteur (106).

4. Ensemble système de conditionnement d'air (20) selon l'une quelconque des revendications 1 à 3, dans lequel la turbine (35) est conçue pour entraîner le ventilateur (45) seulement lorsque l'aéronef (100) est en vol.

5. Ensemble système de conditionnement d'air (20) selon la revendication 1, dans lequel :
le circuit d'air dynamique (40) comprend :
un conduit comprenant une entrée (41) qui est conçue pour recevoir l'air provenant de l'atmosphère et la sortie (42) à travers laquelle l'air est rejeté dans l'atmosphère, dans lequel le ventilateur (45) est conçu pour diriger l'air à travers le conduit (47) ;
dans lequel le circuit d'écoulement de prélèvement (30) comprend des conduits qui sont conçus pour diriger l'air de prélèvement vers les échangeurs de chaleur (43) et vers l'espace intérieur (103) de l'aéronef (100) ;
dans lequel la turbine (35) est conçue pour être entraînée par l'air de prélèvement provenant des échangeurs de chaleur (43) ; et
dans lequel la turbine (35) est conçue pour entraîner le ventilateur (45) pour augmenter la poussée produite par le circuit d'air dynamique (40).

6. Ensemble système de conditionnement d'air (20) selon l'une quelconque des revendications 1 à 5, dans lequel le ventilateur (45) est conçu pour augmenter la pression de l'air dans le circuit d'air dynamique (40) lorsque le ventilateur (45) est entraîné par la turbine (35).

7. Ensemble système de conditionnement d'air (20) selon l'une quelconque des revendications 1 à 6, dans lequel le circuit d'écoulement de prélèvement (30) comprend en outre un compresseur (34), dans lequel les échangeurs de chaleur (43) comprennent un premier échangeur de chaleur (43a) positionné en amont du compresseur (34) et un second échangeur de chaleur (43b) positionné en aval du compresseur (34) et en amont de la turbine (35).

8. Ensemble système de conditionnement d'air (20) selon l'une quelconque des revendications 1 à 7, comprenant en outre une vanne de contournement (44) positionnée le long du circuit d'air dynamique, la vanne de contournement (44) étant conçue pour diriger l'air à l'écart du ventilateur (45) lorsque l'aéronef (100) est en vol.

9. Ensemble système de conditionnement d'air (20) selon l'une quelconque des revendications 1 à 8, comprenant en outre une vanne de contournement (37) positionnée le long du circuit d'écoulement de prélèvement (30), la vanne de contournement (37) étant conçue pour diriger l'air de prélèvement, d'un premier échangeur de chaleur (43a) des échangeurs de chaleur (43) vers un second échangeur de chaleur (43b) des échangeurs de chaleur (43) et contourner une section du circuit d'écoulement de prélèvement (30).

10. Ensemble système de conditionnement d'air (20) selon l'une quelconque des revendications 1 à 6 et 8 et 9, lorsqu'elles ne dépendent pas de la revendication 7, dans lequel la turbine (35) est conçue pour être entraînée par de l'air de prélèvement provenant d'un premier échangeur de chaleur (43a) des échangeurs de chaleur (43) et un second échangeur de chaleur (43b) des échangeurs de chaleur (43) est positionné en aval de la turbine (35).

11. Ensemble système de conditionnement d'air (20) selon l'une quelconque des revendications 1 à 10, comprenant en outre une unité de commande (90) configurée pour commander un ou plusieurs parmi une tuyère de turbine, une vanne de contournement de compresseur (37), une entrée (41) et une sortie (42) du circuit d'air dynamique (40), un débit d'écoulement dynamique, et un débit d'écoulement de l'air de prélèvement pour minimiser une consommation de carburant de l'aéronef (100).

12. Procédé de création de poussée dans un aéronef (100), le procédé comprenant :
la réception d'air en provenance d'un extérieur de l'aéronef (100) dans un circuit d'air dynamique (40) avec le circuit d'air dynamique (40) comprenant un ventilateur (45), et des échangeurs de chaleur (43, 43a, 43b) :
la réception d'air de prélèvement en provenance d'un moteur (106) de l'aéronef (100) dans un circuit d'écoulement de prélèvement (30) ;
le fait de diriger l'air de prélèvement à travers les échangeurs de chaleur (43) et l'abaissement d'une température de l'air de prélèvement ;
le fait de diriger l'air de prélèvement qui s'est déplacé à travers un ou plusieurs des échangeurs de chaleur (43) vers une turbine (35) et l'alimentation en puissance de la turbine (35) ;
l'entraînement du ventilateur (45) dans le circuit d'air dynamique (40) avec la turbine (35) et l'augmentation d'une pression de l'air se déplaçant à travers le circuit d'air dynamique (40) ; et
l'expulsion de l'air avec la pression accrue à travers une sortie (42) du circuit d'air dynamique (40) et la création d'une poussée pour l'aéronef (100) ;
comprenant en outre le fait de diriger l'air à travers le ventilateur (45) et dans un premier échangeur de chaleur (43a) des échangeurs de chaleur (43) et un second échangeur de chaleur (43b) des échangeurs de chaleur (43) avec le ventilateur (45) positionné en amont du premier échangeur de chaleur (43a) et du second échangeur de chaleur (43b) le long du circuit d'air dynamique (40).

13. Procédé selon la revendication 12, comprenant en outre le fait de diriger l'air de prélèvement à la fois à travers le premier échangeur de chaleur (43a) et le second échangeur de chaleur (43b) avant de diriger l'air de prélèvement vers la turbine (35).

14. Procédé selon la revendication 12 ou 13, comprenant en outre l'ajustement d'une tuyère au niveau d'une sortie (42) du circuit d'air dynamique (40) et la création de la poussée pour l'aéronef (100).

15. Procédé selon l'une quelconque des revendications 12 à 14, comprenant en outre le fait de diriger l'air de prélèvement de la turbine (35) vers le second échangeur de chaleur (43b) avec le second échangeur de chaleur (43b) positionné en aval de la turbine (35) le long du circuit d'écoulement de prélèvement (30).
